# EUROPÄISCHE PATENTSCHRIFT

(11) **EP 3 414 991 B1**
(45) Veröffentlichungstag und Bekanntmachung des Hinweises auf die Patenterteilung: **23.02.2022**
(21) Anmeldenummer: 18170390.1
(22) Anmeldetag: 02.05.2018
(51) Int. Cl.: A01F 15/12

(54) **UMHÜLLUNGSEINRICHTUNG UND RUNDBALLENPRESSE**
WRAPPING DEVICE AND ROUND BALER
DISPOSITIF D'ENVELOPPEMENT ET PRESSE À BALLE RONDE

(30) Priorität: 12.06.2017 DE 102017209884
(43) Veröffentlichungstag der Anmeldung: 19.12.2018
(73) Patentinhaber: Deere & Company, Moline, IL 61265 (US)
(72) Erfinder: Gresset, Pascal, 68163 Mannheim (DE); Perrotin, Frederic, 68163 Mannheim (DE)
(74) Vertreter: Reichert, Christian

(56) Entgegenhaltungen:
- DE-A1- 3 331 671
- US-A1- 2009 272 072
- US-A1- 2012 240 520

## Beschreibung

Die vorliegende Erfindung betrifft eine Umhüllungseinrichtung für eine Rundballenpresse, insbesondere eine landwirtschaftliche Ballenpresse zur Bildung rundzylindrischer Ballen, mit Mitteln zur Zufuhr eines Hüllmaterial durch einen Zufuhrspalt an einen in einem Pressraum angeordneten Rundballen und eine Rundballenpresse mit einer Umhüllungseinrichtung.

Bekannte Umhüllungseinrichtungen werden an Rundballenpressen eingesetzt, um einen in einem Pressraum der Rundballenpresse gebildeten Rundballen mit einem Hüllmaterial, beispielsweise einem Netz, einer Folie oder einem ähnlichen, gegebenenfalls auch semipermeabel, atmungsaktiven und/oder wasserabweisenden Material zu umhüllen, bevor dieser nach Abschluss der Umhüllung von der Rundballenpresse abgegeben und danach auf dem Untergrund abgelegt oder an eine weitere Einrichtung, beispielsweise eine Wickeleinrichtung, übergeben wird.

Derartige Rundballenpressen werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc.. Industrielle Pressen finden Verwendung bei der Verdichtung von Müll, Textilien oder anderen Stoffen bzw. bei deren Pressung zu Ballen.

Es sind Umhüllungseinrichtungen bekannt, die ein Hüllmaterial durch einen Zufuhrspalt an einen in einem Pressraum gebildeten Rundballen heranführen, so dass dieses nach Abschluss der Ballenbildung den Rundballen umhüllen kann. Hierbei kann es vorkommen, dass das Hüllmaterial dem Rundballen zu Beginn des Umhüllungsvorgangs nicht oder nur unvollständig zugeführt wird und/oder dass das Hüllmaterial durch den Ballen nicht ergriffen wird, so dass keine oder nur eine unvollständig Umhüllung stattfindet. Häufig stellt eine Bedienungsperson erst nach Auswurf des Rundballens fest, dass der Umhüllungsvorgang nicht erfolgreich abgeschlossen wurde. Die US 2012 / 0240520 A1 offenbart eine Umhüllungseinrichtung für eine Rundballenpresse. Die Einrichtung umfasst einen Hüllmaterialträger mit einem Abstreifer, um Verschmutzungen vom Schneidelement bzw. der Trennkante zu entfernen. Die US 2009 / 0272072 A1 offenbart eine Umhüllungseinrichtung für eine Rundballenpresse. Die Einrichtung umfasst Hüllmaterialträger mit zwei gegeneinander beweglichen Elementen zum Greifen des Hüllmaterials und zur Führung des Hüllmaterials an die Pressmittel. Die DE 3 331 671 A1 offenbart eine Umhüllungseinrichtung mit laufrichtungssichernden Führungselementen.

Die der Erfindung zugrunde liegende Aufgabe wird darin gesehen, eine Umhüllungseinrichtung und eine Rundballenpresse anzugeben, durch welche die vorgenannten Nachteile überwunden werden.

Die Aufgabe wird erfindungsgemäß durch die Lehre der Patentansprüche 1 bzw. 8 gelöst. Weitere vorteilhafte Ausgestaltungen und Weiterbildungen der Erfindung gehen aus den Unteransprüchen hervor.

Es ist eine Umhüllungseinrichtung für eine Rundballenpresse mit Mitteln zur Zufuhr eines Hüllmaterials durch einen Zufuhrspalt an einen in einem Pressraum angeordneten Rundballen vorgesehen. Insbesondere handelt es sich bei er Rundballenpresse um eine landwirtschaftliche Ballenpresse zur Bildung rundzylindrischer Ballen. Es ist wenigstens ein Leitmittel vorgesehen, dass das Hüllmaterial zumindest bereichsweise in Anlage mit wenigstens einem an den Zufuhrspalt vorzugsweise unten angrenzendes, insbesondere antreibbares Pressmittel der Rundballenpresse halten kann. Auf diese Weise kann das Hüllmaterial während eines Umhüllungsvorgangs, aber auch vor und/oder nach einem solchen bzw. während der Bildung eines Ballens an dem Pressmittel bzw. in dem Zufuhrspalt gehalten werden, so dass eine sichere Zufuhr des Hüllmaterials an einen in dem Pressraum gebildeten Rundballen unterstützt wird. Es kann so auch einem Kontakt des Hüllmaterials mit anderen Pressmitteln, beispielsweise einer oberhalb des Zufuhrkanals angeordneten Pressrolle entgegengewirkt werden, so dass das Risiko eines ungewollten Umwickelns von Material um ein solches Pressmittel verringert werden kann. Insbesondere kann aber auch einem Herauswehen von Hüllmaterial aus dem Zufuhrspalt vorgebeugt werden, wie es beispielsweise durch einen durch eine Bewegung der Ballenpresse auftretenden Luftzug oder durch windige Umgebungsbedingen auftreten kann.

Besonders günstig ist es, wenn das Leitmittel zumindest bereichsweise in den Zufuhrspalt hineinragt, so dass es das Hüllmaterial direkt in dem Zufuhrspalt in Kontakt bzw. Anlage mit dem wenigstens einen Pressmittel halten kann. Ragt das Leitmittel darüber hinaus oder alternativ dauerhaft in den Zufuhrspalt hinein, so kann es das Hüllmaterial nicht nur während einer bestimmten Phase, beispielsweise zu Beginn eines Ballenbildungs- und/oder Umhüllungsprozesses, sondern kontinuierlich in Anlage mit dem Pressmittel bzw. der Zufuhrrolle halten.

Insbesondere kann das an den Zufuhrspalt angrenzende Pressmittel als eine Pressrolle als Pressriemen oder auch als dem Zufuhrspalt vorgelagerte Zufuhrrolle ausgebildet sein. Besonders günstig ist es auch, wenn der Zufuhrspalt durch Pressmittel der Rundballenpresse begrenzt wird. Diese Pressmittel können beispielsweise als flexible Pressmittel, beispielsweise in der Art von Pressgurten ausgebildet sein. Vorzugsweise sind die Pressmittel aber in der Art von Pressrollen ausgebildet.

Es ist denkbar, dass das Leitmittel steif oder zumindest im Wesentlichen steif und beispielsweise aus einem Kunststoff gewisser Steifigkeit oder einem Metall gefertigt, ausgebildet ist. Vorzugsweise ist das Leitmittel aber zumindest bereichsweise elastisch bzw. flexibel ausgebildet, so dass das Hüllmaterial unabhängig von der Dicke des Hüllmaterials, etwaigen Ablagerungen o.ä. stabil bzw. kontinuierlich an dem Pressmittel gehalten werden kann, ohne dass es zu Verstopfungen und/oder einem Verklemmen kommt. Vorzugsweise ist das Leitmittel in Richtung des wenigstens einen Pressmittels vorgespannt.

Vorzugsweise erstreckt sich das Leitmittel und/oder ein Grundkörper es Leitmittels zumindest im Wesentlichen über die Breite des Pressraums. Auf diese Weise kann das Leitmittel bzw. sein Grundkörper beispielsweise in einfacher Art und Weise an der Umhüllungseinrichtung angebracht werden. Es kann aber auch vorgesehen sein, dass das Leitmittel nicht bis an Seitenwände der Rundballenpresse heranreicht und/oder nicht den ganzen Pressraum überdeckt, beispielsweise um nicht mit anderen Arbeitsmitteln und/oder -einrichtungen zu intervenieren.

Darüber hinaus kann das Leitmittel wenigstens einen Bereich, vorzugsweise einen Mittenbereich, aufweisen, in der das Leitmittel nicht auf das Hüllmaterial wirkt bzw. mit diesem nicht in Eingriff steht, so dass in diesem Bereich keine durch das Leitmittel unterstützte Anlage des Hüllmaterials an das wenigstens eine Pressmittel bewirkt wird. Dies ist beispielsweise dann günstig, wenn das Hüllmaterial in diesem Bereich abweichend ausgebildet und/oder strukturiert ist. Insbesondere kann das Hüllmaterial in diesem Bereich haftend oder klebend ausgeführt und/oder beschichtet sein. Insbesondere wird das Hüllmaterial in diesem haftenden oder klebenden Bereich nicht mit dem Leitmittel in Verbindung bzw. in Eingriff gebracht, um einem Verkleben/Anhaften des Hüllmaterials an das Leitmittel vorzubeugen bzw. um dieses zu verhindern.

Es ist denkbar, dass das Leitmittel über seine gesamte Wirkbreite einteilig und/oder in sich elastisch bzw. flexibel ausgebildet ist. Ist das Leitmittel aber in einem dem Pressraum zugewandten Bereich zumindest bereichsweise fingerartig ausgebildet, ergibt sich ein günstiges Verhalten und/oder es kann je nach Ausgestaltung ein abweichender Haltedruck erzielt werden. Dazu kann das Leitmittel sich quer zur Laufrichtung des unten angrenzenden Pressmittels erstreckende Seitenbereiche aufweisen, wobei die Seitenbereiche, zumindest bereichsweise, mit dem Pressraum zugewandten Fingern ausgebildet sind, wobei zwischen den Seitenbereichen ein sich quer zur Laufrichtung des unten angrenzenden Pressmittels erstreckender Mittenbereich in Form eines Ausschnitts oder einer Aussparung ausgebildet ist, in dem keine Finger vorgesehen sind.

Die Finger können insgesamt oder bereichsweise gleich lang und/oder breit und/oder unterschiedlich lang, vorzugsweise gestuft, und/oder breit und/oder flächig ausgebildet sein. Es sind aber auch andere Ausbildungen denkbar. Beispielsweise kann ein Fingerspalt zwischen den Fingern in seiner Breite und/oder Formgebung variiert werden. Sind die Finger derart abgestuft ausgebildet, dass die mittleren Finger länger ausgebildet sind, als die äußeren Finger, so kann dies ein Einführen des Hüllmaterials erleichtern. Sind die die Finger alternativ oder auch darüber hinaus flächig ausgebildet, so kann dies ein Ergreifen des Hüllmaterials erleichtern.

Wird eine Rundballenpresse mit einer derartigen Umhüllungseinrichtung ausgestattet, so kann einem Auswerfen eines nicht oder nur teilweise umhüllten Rundballens vorgebeugt werden. Bei der Rundballenpresse handelt es sich insbesondere um eine landwirtschaftliche Ballenpresse zur Bildung rundzylindrischer Ballen. Die Presse kann aber auch im industriellen Bereich, beispielsweise zur Bildung von Ballen aus Papier, Müll, Stoff oder anderen Materialien eingesetzt werden.

Die Rundballenpresse kann einen größenveränderlichen Pressraum aufweisen und/oder die Pressmittel können zumindest bereichsweise durch insbesondere flexible Pressmittel in der Art von Pressgurten gebildet werden. Vorzugsweise weist die Rundballenpresse aber einen zumindest im Wesentlichen größenunveränderlichen Pressraum auf und/oder der Pressraum wird zumindest bereichsweise von Pressmitteln, vorzugsweise in Form von Pressrollen bestimmt.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine schematische Seitenansicht einer landwirtschaftlichen Rundballenpresse mit Pressmitteln und einer Umhüllungseinrichtung,
- Fig. 2: einen vergrößerten Ausschnitt gemäß Figur 1, in dem die Umhüllungseinrichtung mit einem Leitmittel genauer dargestellt wird und
- Fig. 3 a und b: zwei Ausführungsformen eines Leitmittel gemäß Figur 2.

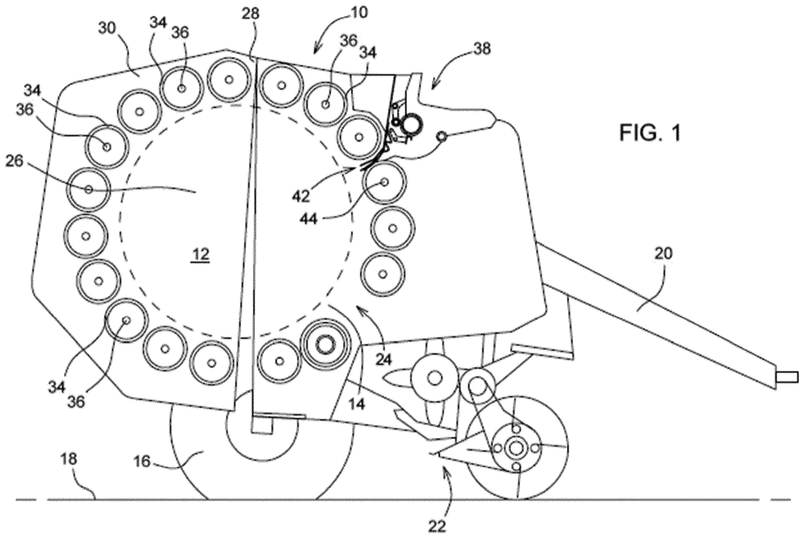

In der Figur 1 der Zeichnung ist eine schematisch dargestellte Rundballenpresse 10 zum Pressen eines Rundballens 12 dargestellt, welche einen ersten Gehäuseteil 14 aufweist, der sich mittels Rädern 16 auf einem Untergrund 18 abstützt und die mittels einer Deichsel 20 an ein nicht gezeigtes Zugfahrzeug, z. B. einen Ackerschlepper, anschließbar ist.

An einer bezogen auf eine Vorwärtsfahrtrichtung vorderen, unteren Seite des ersten Gehäuseteils 14 befindet sich in bekannter Weise eine Aufnahmevorrichtung 22 zur Aufnahme und Zufuhr von Erntegut, die geschnittenes Erntegut durch einen Zufuhrkanal 24 in einen Pressraum 26 fördert, wobei der erste Gehäuseteil 14 einen vorderen Teil des Pressraum 26 umgibt. An dem rückwärtigen oberen Eckbereich des ersten Gehäuseteils 14 befindet sich ein Lager 28 für einen schwenkbaren zweiten Gehäuseteil 30, der einen hinteren Teil des Pressraums 26 umgibt. Der zweite Gehäuseteil 30 gibt im geöffneten Zustand eine Öffnung 32 frei, durch welche ein von der Rundballenpresse 10 gepresster Rundballen 12 abgesetzt bzw. entladen oder ausgeworfen werden kann. Der schwenkbare zweite Gehäuseteil 30 kann mittels Stellmotoren (nicht gezeigt) betätigt werden (geöffnet und geschlossen werden) und stellt somit eine Auslassklappe für einen in dem Pressraum 26 gepressten Rundballen 12 dar.

Gemäß dem vorliegenden Ausführungsbeispiel ist der Pressraum 26 der Rundballenpresse 10 beispielhaft als Pressraum mit Pressrollen 34 größenunveränderlich ausgebildet. Die Rundballenpresse 10 weist dazu eine Vielzahl zueinander parallel verlaufender Pressrollen 34 auf (exemplarisch wurden hier nur einige wenige Pressrollen 34 mit dem Bezugszeichen 34 versehen), deren Rollachsen 36 bei geschlossenem zweiten Gehäuseteil 24 auf einem Kreisbogen gelegen sind, und von denen wenigstens einige angetrieben sind. Die Pressrollen 34 dienen, neben einem Pressen und einer Formgebung, insbesondere auch einer Rotationserzeugung oder einer Rotationserhaltung des in der Presskammer 20 angeordneten Rundballens 12. Die Rundballenpresse 10 ist hier exemplarisch zur Darstellung der Öffnung 32 mit leicht geöffnetem hinterem Gehäuseteil 24 abgebildet. Während eines Pressvorgangs ist dieser jedoch geschlossen.

Ferner umfasst die Rundballenpresse 10 eine Umhüllungseinrichtung 38, die mit einer nur andeutungsweise gezeigten Vorratsrolle für Hüllmaterial 40 bestückt ist. Unmittelbar unterhalb des Zufuhrspalts 42 bzw. an diesen angrenzend ist eine Zufuhrrolle 44 vorgesehen, die abgesehen von ihrer Position, den übrigen Pressrollen 34 gleicht und mit diesen über einen nicht gezeigten Antrieb rotatorisch angetrieben werden kann.

Nachdem der eigentliche Ballenpressvorgang, also die Erntegutaufnahme und Bildung eines Rundballens 12 durch die Pressrollen 34 abgeschlossen ist, wird eine Fahrt über den Untergrund 18 unterbrochen, da die Rundballenpresse 10 mit dem Rundballen gefüllt ist und kein weiteres Erntegut mehr in den Pressraum 26 aufgenommen werden soll bzw. kann. Zu dieser Zeit wird auch die Umhüllungseinrichtung 38 aktiviert, ein sich dem Ballenpressvorgang anschließender Umhüllungsvorgang eingeleitet und das Hüllmaterial 40 von der Vorratsrolle 40 durch einen Zufuhrspalt 42 in den Pressraum 20 und an den Ballen 12 herangeführt. Durch eine anhaltende Drehung des sich in dem Pressraum 26 befindlichen Rundballens 12 wird das Umhüllungsmaterial 40 derart um den Rundballen 12 gewickelt, dass es eine Umfangsfläche des Rundballens 12 umhüllt. Nachdem ein Umhüllungsvorgang abgeschlossen ist, wird der Rundballen 12 mittels Öffnen des in der Art einer Auslassklappe wirkenden zweiten Gehäuseteils 30 durch die Öffnung 32 über einer Entladerampe (nicht gezeigt) auf dem Untergrund 18 abgelegt. Sodann wird die Fahrt mit der Rundballenpresse 10 wieder aufgenommen und ein neuer Ballenpressvorgang beginnt.

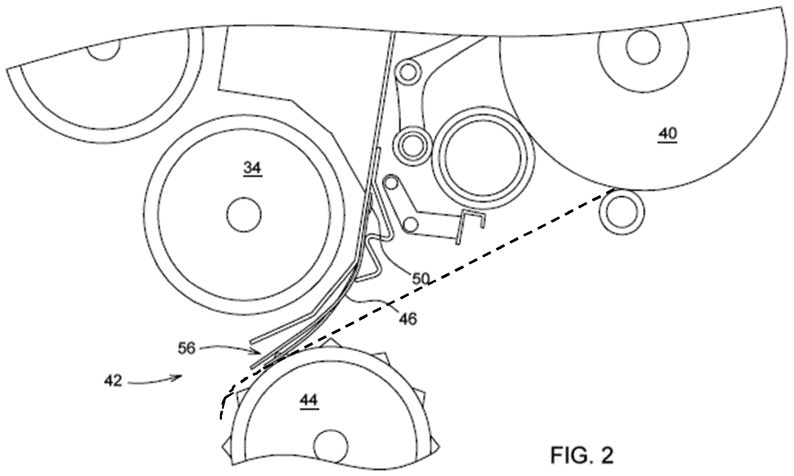

Es wird nun auch auf die Figur 2 der Zeichnung Bezug genommen, in der die Umhüllungseinrichtung 38 in einer vergrößerten Darstellung gezeigt wird. Die Umhüllungseinrichtung 38 ist gemäß dem vorliegenden Ausführungsbeispiel grundsätzlich in bekannten Art und Weise ausgebildet. Das Hüllmaterial 40 wird dem Zufuhrspalt 42 dabei derart zugeführt, dass es durch die angetriebene Zufuhrrolle 44 ergriffen und in Richtung des Ballens 12 gefördert wird. Gemäß dem vorliegenden Ausführungsbeispiel wird das Hüllmaterial 40 zumindest im Wesentlichen von oben an die Zufuhrrolle 44 herangeführt, wodurch es in einfacher Weise von dieser ergriffen und mitgenommen werden kann. Darüber hinaus weist die Umhüllungseinrichtung 38 ein Leitmittel 46 auf, dass das Hüllmaterial 40 zumindest im Wesentlichen kontinuierlich in Anlage an der Zufuhrrolle 44 hält.

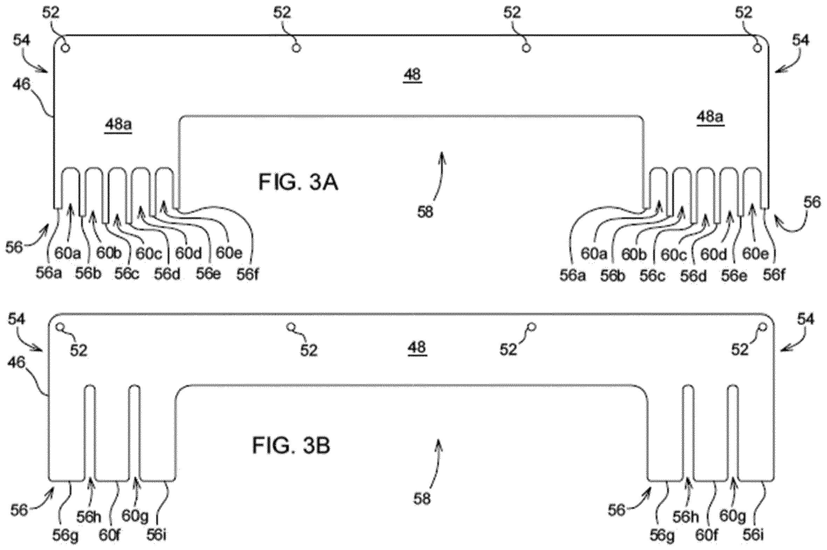

Es wird nun auch auf die Figuren 3a und 3b Bezug genommen, in der das Leitmittel 46 in zwei unterschiedlichen Ausführungsformen dargestellt wird. Das Leitmittel 46 weist in beiden Ausführungsformen einen im wesentlichen flachen Grundkörper 48 auf, der aus einem flexiblen bzw. elastischen Material wie beispielsweise einem Kunststoffmaterial besteht. Dieser Grundkörper 48 ist einen Ends über in Figur 2 nur andeutungsweise dargestellte Befestigungsmittel 50, die mit Öffnungen 52 in dem Grundkörper 48 zusammenwirken, mit der Umhüllungseinrichtung 38 verbunden. Andern Ends ist der Grundkörper 48 in jeweils äußeren Bereichen 54 fingerartig ausgebildet bzw. er weist Finger 56 auf, welche sich von dem Grundkörper 48 weg erstrecken. In einem Mittenbereich 58 des Leitmittels 46 sind gemäß dem vorliegenden Ausführungsbeispiel keine Finger 56 vorgesehen, worauf im Folgenden noch näher eingegangen wird. Die Finger 56 erstrecken sich im Betrieb derart in den Zufuhrspalt 42 hinein, dass sie an der unteren Zufuhrrolle 44 anliegen und das Hüllmaterial 40 in Anlage an der unteren Zufuhrrolle 44 halten.

Gemäß der in der Figur 3a gezeigten Ausführungsform sind jeweils sechs Finger 56a-56f unterschiedlicher Länge in den jeweiligen äußeren Bereichen 54 vorgesehen, wobei zwischen dem Grundkörper 48 und den eigentlichen Fingern 56a-56f eine sich nur über die äußeren Bereiche 54 erstreckende Grundkörperverlängerung 48a vorgesehen ist. Die Finger 56a und 56f, 56b und 56e sowie 56c und 56 d sind jeweils im Wesentlichen gleich lang ausgebildet. Zwischen den Fingern 56a-56f sind Fingerspalte 60a-60d vorgesehen.

Die drei Finger 56g-56i der zweiten Ausführungsform sind gemäß Figur 3b entsprechend in äußeren Bereichen 54 des Grundkörpers 48 angeordnet und erstrecken sich direkt von diesen weg. Es sind hier nun allerdings Finger 56g-56i gleicher Länge vorgesehen, welche insbesondere im Vergleich mit den Fingern 56a-56f gemäß dem ersten Ausbildungsbeispiel flächiger bzw. breiter ausgebildet sind. Zwischen den Fingern 56g-56i sind Fingerpalte 60f, 60g vorgesehen, die verglichen mit den Fingerspalten 60a-60e gemäß dem ersten Ausführungsbeispiel in Figur 3 a deutlich schmaler ausgebildet sind.

Neben den in den Figuren 3a und 3b gezeigten Ausführungsformen kann das Leitmittel 46 auch einteilig oder abweichend geteilt und/oder segmentiert ausgebildet sein. Insbesondere sind abweichende Finger-/Fingerspaltzahlen und -ausbildungen/-ausformungen möglich. Dies insbesondere um ein abweichendes Andrück- bzw. Halteverhalten und/oder eine andere Vorspannung, ein anderes Federverhalten des Leitmittels 46 und/oder der Finger 56 zu erzielen. Darüber hinaus ist es wie bereits erwähnt vorgesehen, den Mittenbereich des Leitmittels mit einem Ausschnitt zu versehen, in denen keine Finger vorgesehen sind. Dieser Ausschnitt dient der Verwendung von Hüllmaterial mit Haftmitteln, beispielsweise einem Klebebereich, der auf der dem Leitmittel zugewandten Seite des Hüllmaterials in dem genannten Mittenbereich vorgesehen sein kann. In diesem Bereich würde das Hüllmaterial unter Umständen an einem Leitmittel ohne Ausschnitt, also mit auch im Mittenbereich ausgebildeten Fingern, an denselben haften bleiben und kontraproduktiv nicht in den Pressraum geführt werden können. Der Ausschnitt im Mittenbereich des Leitmittels ermöglicht somit die Verwendung des Leitmittels beim Einsatz von Hüllmaterial mit als auch ohne Klebestreifen im genannten Mittenbereich.

## Patentansprüche

1. Umhüllungseinrichtung (38) für eine Rundballenpresse (10), insbesondere einer landwirtschaftlichen Ballenpresse zur Bildung rundzylindrischer Ballen, mit Mitteln zur Zufuhr eines Hüllmaterials (40) durch einen Zufuhrspalt (42) in einen Pressraum (26) einer Rundballenpresse (10), **dadurch gekennzeichnet, dass** wenigstens ein Leitmittel (46) vorgesehen ist, dass das Hüllmaterial (40) zumindest bereichsweise in Anlage mit wenigstens einem unterhalb des Zufuhrspalts (42) angrenzenden Pressmittel der Rundballenpresse (10) halten kann.

2. Umhüllungseinrichtung (38) nach Anspruch 1, **dadurch gekennzeichnet, dass** das Leitmittel (46) zumindest bereichsweise in den Zufuhrspalt (42) und/oder dauerhaft in den Zufuhrspalt (42) hineinragt.

3. Umhüllungseinrichtung (38) nach Anspruch 1 oder 2, **dadurch gekennzeichnet, dass** das an den Zufuhrspalt (42) angrenzende Pressmittel als Pressrolle (44) ausgebildet ist und/oder dass der Zufuhrspalt (42) durch Pressmittel der Rundballenpresse (10) begrenzt wird.

4. Umhüllungseinrichtung (38) nach einem der vorherigen Ansprüche, **dadurch gekennzeichnet, dass** das Leitmittel (46) zumindest bereichsweise elastisch ausgebildet ist, vorzugsweise derart, dass es in Richtung des wenigstens einen Pressmittels vorgespannt ist.

5. Umhüllungseinrichtung (38) nach einem der vorherigen Ansprüche, **dadurch gekennzeichnet dass** sich das Leitmittel (46) und/oder ein Grundkörper (48) des Leitmittels (46) zumindest im Wesentlichen über die Breite des Pressraums (26) oder nur über einen Teilbereich seiner Breite erstreckt.

6. Umhüllungseinrichtung (38) nach einem der vorherigen Ansprüche, **dadurch gekennzeichnet, dass** das Leitmittel (46) wenigstens einen Bereich, vorzugsweise einen sich quer zur Laufrichtung des unten angrenzenden Pressmittels erstreckenden Mittenbereich (58), aufweist, in der es nicht auf das Hüllmaterial (40) wirkt bzw. nicht mit dem Hüllmaterial (40) im Eingriff steht.

7. Umhüllungseinrichtung nach einem der vorherigen Ansprüche, **dadurch gekennzeichnet, dass** das Leitmittel (46) sich quer zur Laufrichtung des unten angrenzenden Pressmittels erstreckende Seitenbereiche (48a) aufweist, wobei die Seitenbereiche (48a) zumindest bereichsweise mit dem Pressraum zugewandten Fingern (56) ausgebildet sind, wobei zwischen den Seitenbereichen (48a) ein sich quer zur Laufrichtung des unten angrenzenden Pressmittels erstreckender Mittenbereich (58) in Form eines Ausschnitts oder einer Aussparung ausgebildet ist, in dem keine Finger (56) vorgesehen sind.

8. Umhüllungseinrichtung nach Anspruch 7, **dadurch gekennzeichnet, dass** die Finger (56) insgesamt oder bereichsweise gleich lang und/oder breit und/oder unterschiedlich lang, vorzugsweise gestuft, und/oder unterschiedlich breit sind und/oder flächig ausgebildet sind.

9. Rundballenpresse (10), insbesondere eine landwirtschaftliche Ballenpresse zur Bildung rundzylindrischer Ballen, mit einer Umhüllungseinrichtung (38) nach einem der vorherigen Ansprüche.

10. Rundballenpresse nach Anspruch 9, **dadurch gekennzeichnet, dass** die Rundballenpresse (10) einen zumindest im Wesentlichen größenunveränderlichen Pressraum (26) aufweist und/oder deren Pressraum (26) zumindest bereichsweise von Pressmitteln, vorzugsweise in Form von Pressrollen (34) bestimmt wird.

## Claims

1. Wrapping device (38) for a round baler (10), in particular of an agricultural baler for forming round-cylindrical bales, comprising means for feeding an enveloping material (40) through a feed gap (42) into a pressing chamber (26) of a round baler (10), **characterized in that** at least one directing means (46) is provided that can keep the enveloping material (40) in contact at least in regions with at least one pressing means of the round baler (10), said pressing means being adjacent below the feed gap (42).

2. Wrapping device (38) according to Claim 1, **characterized in that** the directing means (46) projects at least in regions into the feed gap (42) and/or permanently into the feed gap (42).

3. Wrapping device (38) according to Claim 1 or 2, **characterized in that** the pressing means adjacent to the feed gap (42) is designed as a pressing roller (44), and/or **in that** the feed gap (42) is bounded by pressing means of the round baler (10).

4. Wrapping device (38) according to one of the preceding claims, **characterized in that** the directing means (46) is of elastic design at least in regions, preferably in such a manner that said directing means is prestressed in the direction of the at least one pressing means.

5. Wrapping device (38) according to one of the preceding claims, **characterized in that** the directing means (46) and/or a basic body (48) of the directing means (46) extends at least substantially over the width of the pressing chamber (26) or only over a partial region of the width thereof.

6. Wrapping device (38) according to one of the preceding claims, **characterized in that** the directing means (46) has at least one region, preferably a central region (58) which extends transversely with respect to the running direction of the pressing means adjacent at the bottom, in which said directing means does not act on the enveloping material (40) or is not in engagement with the enveloping material (40).

7. Wrapping device according to one of the preceding claims, **characterized in that** the directing means (46) has side regions (48a) extending transversely with respect to the running direction of the pressing means adjacent at the bottom, wherein the side regions (48a) are formed at least in regions with fingers (56) facing the pressing chamber, wherein a central region (58) is formed between the side regions (48a), said central region extending transversely with respect to the running direction of the pressing means adjacent at the bottom, being in the form of a cutout or a recess and in which no fingers (56) are provided.

8. Wrapping device according to Claim 7, **characterized in that** the fingers (56) are formed overall or in regions in an identical length and/or width and/or different length, preferably in stepped form and/or in a different width and/or in flat form.

9. Round baler (10), in particular an agricultural baler for forming round-cylindrical bales, comprising a wrapping device (38) according to one of the preceding claims.

10. Round baler according to Claim 9, **characterized in that** the round baler (10) has a pressing chamber (26) which is at least substantially invariable in terms of size, and/or the pressing chamber (26) of which is determined at least in regions by pressing means, preferably in the form of pressing rollers (34).

## Revendications

1. Appareil d'enveloppement (38) pour une presse à balles rondes (10), notamment d'une presse à balles agricole pour la formation de balles cylindriques rondes, muni de moyens pour l'introduction d'un matériau d'enveloppement (40) par une fente d'introduction (42) dans une chambre de pressage (26) d'une presse à balles rondes (10), **caractérisé en ce qu'**au moins un moyen de direction (46) est prévu, qui peut maintenir le matériau d'enveloppement (40) au moins en zones en contact avec au moins un moyen de pressage de la presse à balles rondes (10) adjacent en dessous de la fente d'introduction (42).

2. Appareil d'enveloppement (38) selon la revendication 1, **caractérisé en ce que** le moyen de direction (46) fait saillie au moins en zones dans la fente d'introduction (42) et/ou de manière permanente dans la fente d'introduction (42).

3. Appareil d'enveloppement (38) selon la revendication 1 ou 2, **caractérisé en ce que** le moyen de pressage adjacent à la fente d'introduction (42) est configuré en tant que rouleau de pressage (44) et/ou **en ce que** la fente d'introduction (42) est délimitée par des moyens de pressage de la presse à balles rondes (10) .

4. Appareil d'enveloppement (38) selon l'une quelconque des revendications précédentes, **caractérisé en ce que** le moyen de direction (46) est configuré sous forme élastique au moins en zones, de préférence de telle sorte qu'il est précontraint en direction de l'au moins un moyen de pressage.

5. Appareil d'enveloppement (38) selon l'une quelconque des revendications précédentes, **caractérisé en ce que** le moyen de direction (46) et/ou un corps de base (48) du moyen de direction (46) s'étend au moins essentiellement sur la largeur de la chambre de pressage (26) ou uniquement sur une zone partielle de sa largeur.

6. Appareil d'enveloppement (38) selon l'une quelconque des revendications précédentes, **caractérisé en ce que** le moyen de direction (46) comprend au moins une zone, de préférence une zone médiane (58) s'étendant perpendiculairement à la direction de déplacement du moyen de pressage adjacent en dessous, dans laquelle il n'agit pas sur le matériau d'enveloppement (40) ou n'est pas en prise avec le matériau d'enveloppement (40).

7. Appareil d'enveloppement selon l'une quelconque des revendications précédentes, **caractérisé en ce que** le moyen de direction (46) comprend des zones latérales (48a) s'étendant perpendiculairement à la direction de déplacement du moyen de pressage adjacent en dessous, les zones latérales (48a) étant configurées au moins en zones avec des doigts (56) tournés vers la chambre de pressage, une zone médiane (58) sous la forme d'une découpe ou d'un évidement, s'étendant perpendiculairement à la direction de déplacement du moyen de pressage adjacent en dessous, étant formée entre les zones latérales (48a), dans laquelle aucun doigt (56) n'est prévu.

8. Appareil d'enveloppement selon la revendication 7, **caractérisé en ce que** les doigts (56) sont entièrement ou en zones de même longueur et/ou largeur et/ou de longueur différente, de préférence échelonnés, et/ou sont de largeur différente et/ou sont configurés sous forme plate.

9. Presse à balles rondes (10), notamment presse à balles agricole pour la formation de balles cylindriques rondes, munie d'un appareil d'enveloppement (38) selon l'une quelconque des revendications précédentes.

10. Presse à balles rondes selon la revendication 9, **caractérisée en ce que** la presse à balles rondes (10) comprend une chambre de pressage (26) de taille au moins essentiellement invariable et/ou dont la chambre de pressage (26) est déterminée au moins par zones par des moyens de pressage, de préférence sous la forme de rouleaux de pressage (34).
